# EUROPEAN PATENT APPLICATION

(11) **EP 4 520 175 A1**
(43) Date of publication of application: **12.03.2025**
(21) Application number: 23799057.7
(22) Date of filing: 03.05.2023
(51) Int. Cl.: A21D 6/00, A21D 2/02, A21D 2/36

(54) **METHOD FOR PRODUCING LIPOPHOBIC BREADING FLOUR AND RESPECTIVE PRODUCT OBTAINED**

(30) Priority: 03.05.2022 BR 102022008570
(71) Applicant: Vezzani, Marco, 02712-120 São Paulo (BR)
(72) Inventor: Vezzani, Marco, 02712-120 São Paulo (BR)
(74) Representative: Studio Torta S.p.A.
(86) International application number: PCT/BR2023/050135
(87) International publication number: WO 2023/212792

(57) **Abstract**

The present invention relates to a method for producing lipophobic breading flour, belonging to the foodstuff field, more specifically aimed at a method for producing breading flour with low oil absorption.

## Description

### FIELD OF INVENTION

The present invention relates to a process for producing lipophobic breading flour, belonging to the foodstuff field, more specifically aimed at a process for producing breading flour with low oil absorption.

### DESCRIPTION OF THE STATE OF THE ART

Breading flour or bread crumbs finds more and more applications in the modern food industry as a coating for frying breaded and fried foods such as steak parmigiana, breaded and fried meat, fish, shrimp and seafood, widely accepted not only for domestic use, but also in the restaurant sector, due to the unique good texture and fragrance.

Breading for frying foods are done by applying processed flour or bread crumbs, acting as a barrier to prevent the high temperature of the oil from being transferred directly to the ingredients, prevent modification of the nutritional properties, taste properties, prevent the loss of ingredients, promote frying for a reduced time to form a layer with a unique texture, and promote oil absorption and moderate hardening to produce a unique aroma and flavors.

The recent increase in health awareness, the rejection of excessive calorie intake from fat and oil has become a constant pursuit, so high-fat foods such as fried foods tend to be avoided. The occurrence of angina or myocardial infarction due to obesity raises society's concern about the consumption of foods rich in fat. Therefore, a weak point from a nutritional point of view is the resistance or even the rejection that the medical community and food technicians make to this practice that requires, in its finishing, the use of vegetable oils of various types, such as margarine or even animal fats such as lard, etc.

Technical solutions, such as the use of oven, air fryer and other ways of frying without oil have been applied as an alternative, however, classic frying still has great appeal, due to its lower cost and practicality. For this reason, when it comes to classic frying by immersion, the technical environment has been looking for alternatives to increase the healthy appearance of fried foods, so that the product is "dry and crunchy", avoiding, whenever possible, that the covering or coating presents a soft, greasy and soggy appearance.

To obtain breading results with crunchiness, it is common to purchase Panko-type breading flour, of Japanese origin, which conveys precisely this sensation to the user. This flour is obtained by the industrial processing of bread in the form of crumbs. Bread crumbs, processed with the addition of sugar and other additives, is another type of bread crumb widely used by the market. In practice, sugar helps in this effect by crystallizing when subjected to frying, thus leaving a feeling of crunchiness, however, the high absorption of oil or fats during frying is a problem that persists.

Thus, the capacity of non-absorption of oil should be highly relevant in the evaluation of the quality of a breading flour, because it is precisely this external coating that conditions the amount of oil that the breaded and fried food transmits to consumers. Unfortunately, such property is not a determining characteristic when choosing a breading flour, or because there is no technical specification in practice or in the legislation or regulation of the sector. Nor is a standardized and easily reproducible method known and applied for this characteristic to be evidenced, analyzed and applied.

This situation is very strange and difficult to understand, even in view of the obvious increase in the costs of all frying oils.

It can be said that reducing the oil absorption factor is doubly advantageous both from the point of view of the health of consumers, and for the strong and measurable savings that it allows in the entire food chain of breaded fried foods.

Thus, when facing a topic of this importance and complexity, it is always necessary to emphasize an analysis of the existing breading technologies and the origin of oil absorption in fried and breaded foods. It is quite simple to understand how the characteristic of being soaked in oil during frying basically depends on a physical fact that is obvious: the contact surface between the liquefied oil or fat.

It is known that fatty acids are low surfactant products, that is, they have reduced surface tension. Consequently, they tend to occupy the entire surface exposed to contact with oil during hot immersion, which occurs around 180°C.

Among the methods of production of breading flour in the world are:

The first, which is the traditional use of bread as a base, produced by the most different techniques, classical, ancient and precursor. Roughly speaking, it consists of adhering a uniform layer of bread flour, also known as bread crumbs, to the entire surface of the food, and then frying by immersion or grilling in a pan greased with a drizzle of olive oil. Although the procedure seems simple, it is necessary to have some knowledge of the steps so that the breading does not come loose at the time of frying or has coating failures. The process usually consists of passing the seasoned and dried food in wheat flour, beaten eggs and finally bread crumbs, frying it, preferably then in oil heated between 160 and 180°C, and then placing it on paper or on a grill. It is evident that every type of conventional bread, including loaf of bread, carries with it the qualitative advantage of well-fermented bread. However, this fermentation creates inside the bread, a series of micro and macro caves that are perfectly visible even to the naked eye. Evidently, a product of low surface tension such as a heated fatty acid tends to penetrate the interior of these micro caves, until it occupies the entire internal and external exposed surface of each grain of breading flour. Consequently, it is easy to demonstrate that the better and tastier from an organoleptic point of view, the traditional bread is, the more fermented and consequently the more contact surface it has, it becomes more soaked, absorbs a greater amount of frying oils.

The second type of breading is carried out using a flour baking technique called extrusion, widely used in the USA, and synonymous with the modern breading method in Europe and Brazil. It consists of passing bread-type dough through a food extruder at high temperature, opportunely regulated until it reaches the desired gelatinization point, generating a strong expansion of the drawn dough and high temperature that thus tends to form a series of segments with many alveoli, mainly due to the expansion of the water contained in the extruded bread dough.

Regarding the alveolate or micro-cavernous characteristic of breading flours, the main technique is the determination of the apparent density of the grains of the breading flour. In a well-fermented bread flour, it is around 0.4 and 0.5g/cm3. In an extrusion-produced bread flour, it is around 0.3 and 0.5 g/cm3.

### BRIEF DESCRIPTION OF THE INVENTION

Through these and other various aspects and needs of the technical environment, and seeking to apply the experience acquired in the practice of manufacturing flour for special uses, the inventor developed the present invention, idealizing a process to obtain lipophobic breading flour, which consists of using a centrifugal turbo baking equipment, capable of baking and centrifuging initial cereal flour and/or mixtures thereof (preferably wheat, corn, rice, rye, barley, oats, soybeans or other types) properly moistened and enriched by the addition of iron, folic acid and annatto-type dye, subjecting them to a forced centrifugation so that the bread dough is pushed along a horizontal path, in contact with an ultra-heated wall.

The force normally and initially used for this operation, which is called "thermalization", is around 80°C to 100°C.

For this, in order to improve the lipophobic characteristics, a type of rotor suitable for running at a speed up to 1500 rpm was then developed. Consequently, the centrifugal force on the ground bread particles was doubled up to 200°C, thus creating a greater compression effect and an even higher bulk density that can be measured up to a value of 1.2 g/cm3.

In this way, the outer surface of the grains that make up the breading product is compacted, preventing any penetration of the frying oil into the interior of the core.

Another innovative solution that has been applied consists of saturating the internal area of the centrifugal turbo baking intended for the initial preparation of the microgranules by feeding saturated steam at 22 *ATE* obtained from an expressly installed boiler.

This heated steam has the dual function of gelatinizing the outer surface of each grain or micrograin of ground bread, making it smooth and compact with better sensitivity to the centrifugation action described above.

The use of partially superheated steam is therefore of decisive importance in obtaining the claimed lipophobic characteristic.

In a breading flour produced by the process with centrifugal turbo baking equipment, the following properties are obtained: apparent density between 0.7 g/cm³ and 1.2 g/cm³, more specifically 0.8 g/cm³; actual density or specific mass between 1.2 g/cm³ and 1.5 g/cm³; more specifically 1.4 g/cm³; porosity between 20% and 60%, more specifically 40%; specific surface area between 1.0 m³/g and 1.1 m³/g, more specifically 1.03 m³/g. This is achieved through process and control parameters. Other relevant characteristics obtained with the new process reduced humidity in the final product (of a maximum of 10%) and the following granulometric ranges (% of fraction retained in sieve): ABNT no. 12 (1.40mm opening): between 0.1% and 5.0%; ABNT sieve no. 20 (0.85mm opening): between 4.0% and 30.0%; ABNT sieve no. 45 (0.355mm opening): between 56.0% and 90.0%; ABNT no. 45 (0.355mm opening): between 10.0% and 41.0%.

In addition to the properties mentioned, others are relevant and need attention, which are the morphology of the microstructure and the index of shape of the particle.

In the case of microstructure morphology, low oil absorption, without loss of crunchiness, is achieved thanks to the presence of grains with a sintered and massive structure containing two morphological types of particles: irregular lenticular and planar. The surface of lenticular particles is smooth while the surface of planar particles is slightly rough. Irregular planar particles are generally interstitial to lenticular particles.

Another important property is that agglomerates formed by lenticular particles disaggregate more easily than planar particles when biting, which promotes crunchiness during the consumption of the product.

In addition, the agglomerates have intercommunicable interstitial voids, which promotes the infiltration of the oil during frying, but its easy exit during drainage. Because planar and lenticular particles have a solid core, oil absorption does not occur.

Regarding the index of shape, the present invention predicts that the sphericity of the grains is between 0.5 and 0.9, more specifically 0.8 and the circularity is between 0.5 and 0.9, more specifically 0.7. These properties show the easy rolling between the grains of flour and the ease with which it has to drain the oil from its surface.

The invention proposed here is totally different and innovative, as it promotes the obtaining of a breading flour that provides, in breaded products, the reduction of oil/fat consumption in frying, reduce the dirtiness of the oil due to its high density, provide a dry and crunchy coating, a superior performance when the product is reheated in a conventional oven and microwave, uniform density and granulometry and versatility of products and use. In cold cuts, it gives crunchy texture to the filling and excellent palatability.

Thus, this patent was designed aiming at obtaining a process and respective product with the fewest possible steps, conveniently configured and arranged to allow the company to perform its functions with unparalleled efficiency and versatility, without the inconveniences already mentioned.

The present patent application presents a process for obtaining lipophobic breading flour with all aesthetic and functional qualities, designed and developed according to the most modern techniques, thus enabling its most varied use, from its use for the production of breading flours to its use for the production of high-density flours for special uses, as well as in industrial use in various cases.

Its design and mode of operation allows an excellent level of functionality to be obtained, offering a flexible process, having been created mainly to obtain flour and breading with the lowest possible oil absorption factor.

It is thus understood that the process for obtaining lipophobic breading flour presented here is extremely simple in its constructivity, being, therefore, easy to do, however, excellent practical and functional results are obtained, offering a differentiated constructivity over the known breading flour manufacturing processes.

### BRIEF DESCRIPTION OF THE FIGURE

Next, for the proper understanding and comprehension of how the **"PROCESS FOR PRODUCING LIPOPHOBIC BREADING FLOUR AND RESPECTIVE PRODUCT OBTAINED"** is constituted, which is claimed here, the attached illustrative drawing is presented, where it is seen:

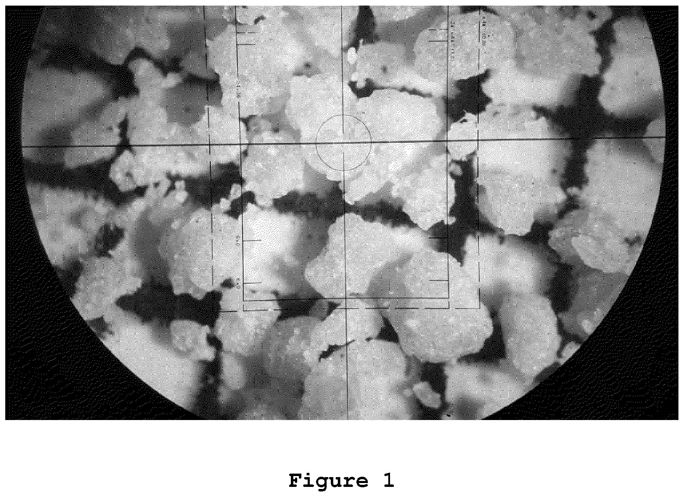

Figure 1 - Shows the microscopic view of lipophobic flour grains, seen under an optical microscope, showing index of shape by the sphericity and circularity of most agglomerated grains formed by lenticular particles and planar particles have an index of shape, where the sphericity of the agglomerated grains is between 0.5 and 0.9, more specifically 0.8 and the circularity is between 0.5 and 0.9, more specifically 0.7.

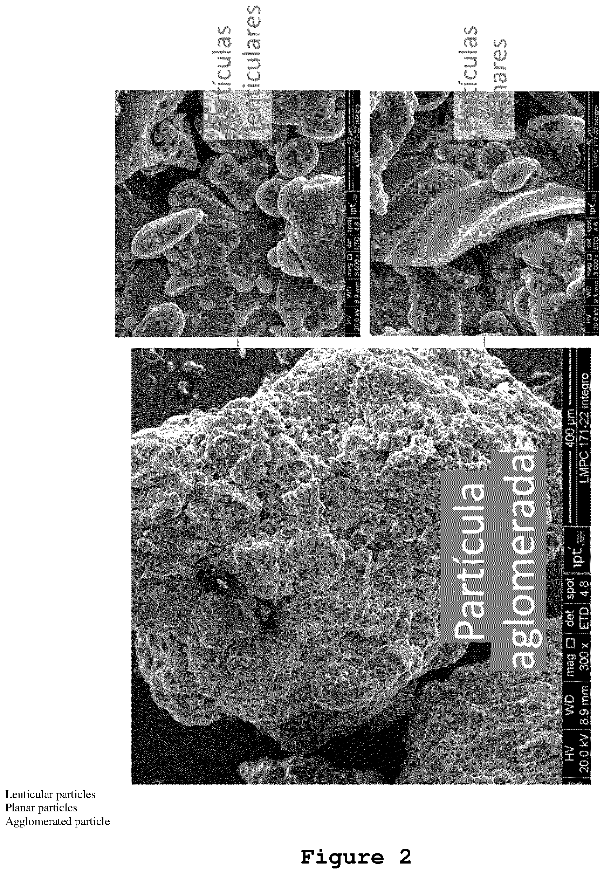

Figure 2 - Shows electromicrograph containing analysis of the morphological composition of lipophobic breading flour, composed of agglomerated grains, which in turn are composed of massive lenticular particles mostly, and planar or placoid particles.

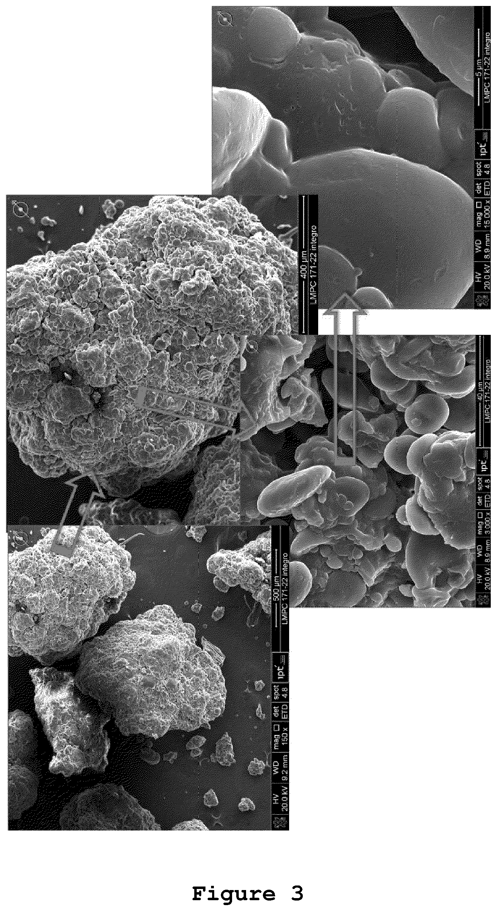

Figure 3 - Shows electromicrograph containing morphological analysis of the lipophobic breading flour, in a sequence of successive magnification up to 15,000x, and illustrating the smooth surface of the sintered lenticular particles. Presence of lenticular particles with a size between 5 and 10 µm.

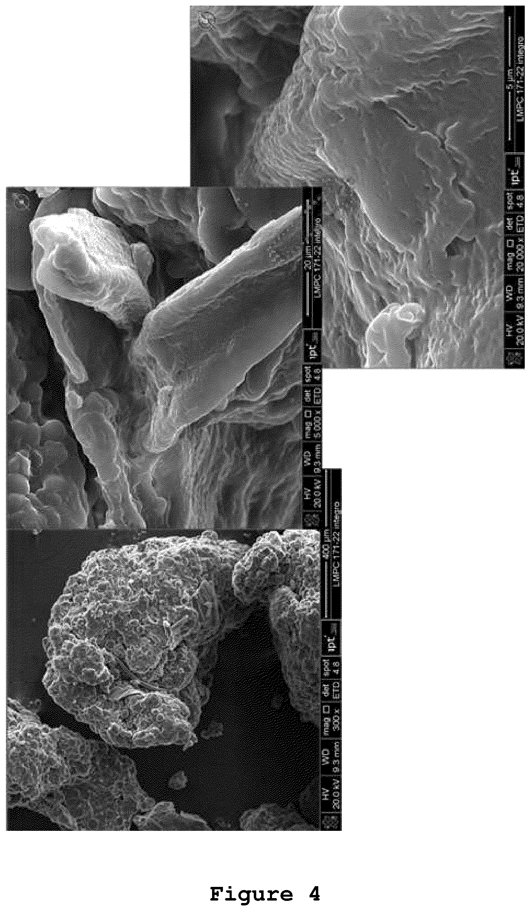

Figure 4 - Shows electromicrograph containing morphological analysis of the lipophobic breading flour, in a sequence of successive magnification up to 20,000x. Note the slightly rough surface of the sintered planar particles. Presence of particles with a size between 40 and 100 µm.

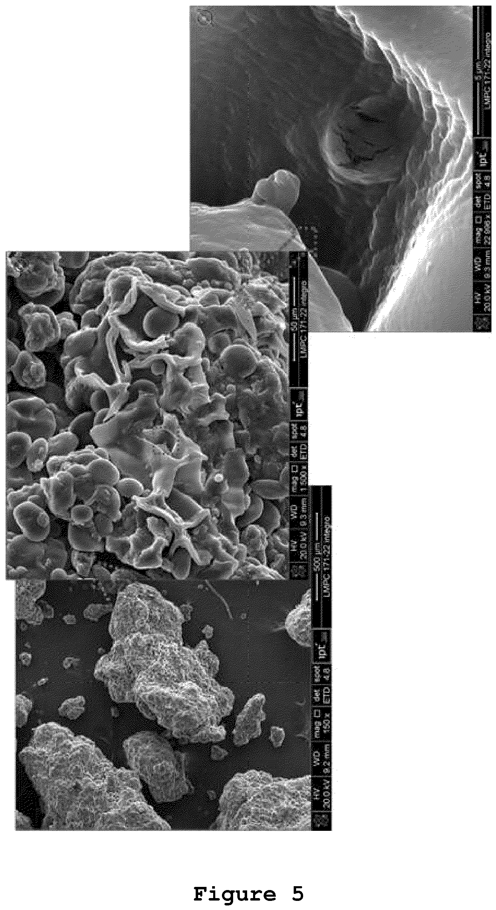

Figure 5 - Shows electromicrograph containing morphological analysis of lipophobic breading flour, in a sequence of successive magnification up to 22,000x. The irregular morphology of the sintered planar interstitial particles is noted in the second image, and the slightly rough surface of these particles in the image of higher magnification on the right. Lenticular particles with a size of approximately 25 µm, and irregular planar particles between 25 and > 100 µm. The rounded feature with cracks in the last image was produced by the electron beam, aggressive to the material at this magnification.

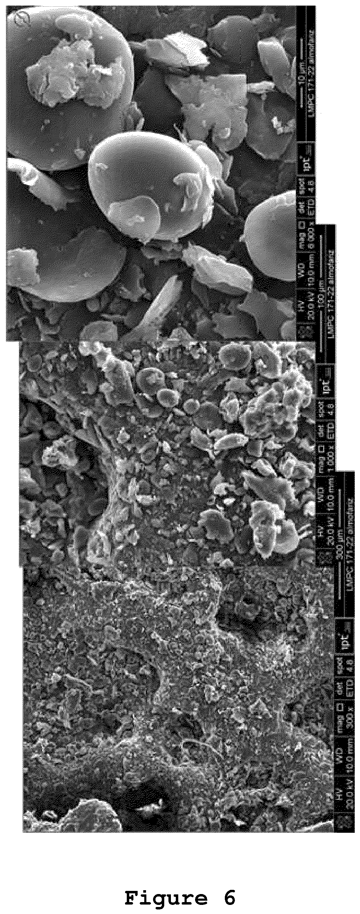

Figure 6 - Shows electromicrograph containing morphological analysis of lipophobic breading flour, in a sequence of successive magnification up to 6,000x. The degree of disaggregation promoted by grinding is noted, where it is possible to observe the individualized lenticular and planar particles, which make up the agglomerated particle. Presence of lenticular particles with a size of approximately 20 µm, and irregular planar particles between 10 and 50 µm.

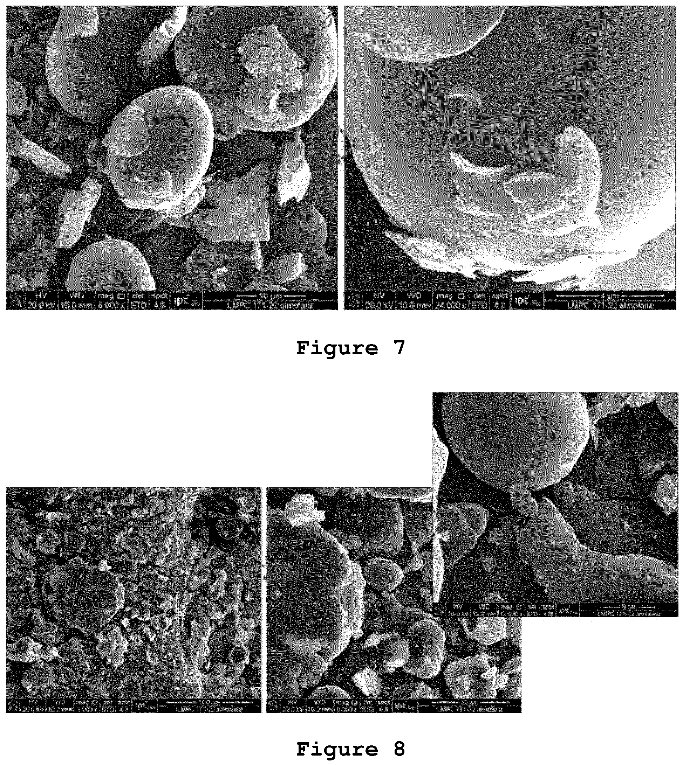

Figure 7 - Shows electromicrograph containing morphological analysis of lipophobic breading flour, ground in mortar, illustrating, in detail, the lenticular particle surface with sintered planar particles (semi-adhered) and the presence of lenticular particles with a size of approximately 20 µm, and irregular planar particles between 2 and 15 µm.
Figure 8 - Shows electromicrograph containing morphological analysis of lipophobic breading flour, ground in mortar, in a sequence of successive magnification up to 12,000x. The degree of disaggregation promoted by grinding is noted, where it is possible to observe the individualized lenticular and planar particles, which make up the agglomerated particle. Presence of lenticular particles with a size of 10 to 20 µm, and irregular planar particles between 2 and 100 µm.

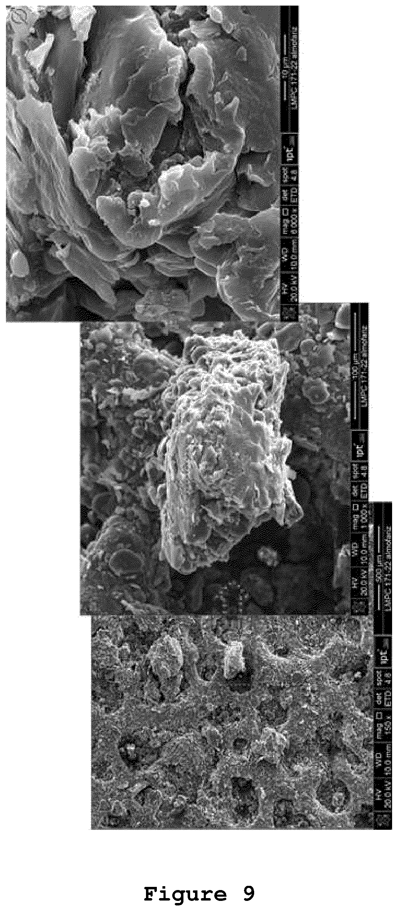

Figure 9 - Shows electromicrograph containing morphological analysis of the lipophobic breading flour, ground in mortar, in a sequence of successive magnification up to 6,000x and illustrating an agglomeration of irregular planar particles, measuring between 5 and 100 µm.

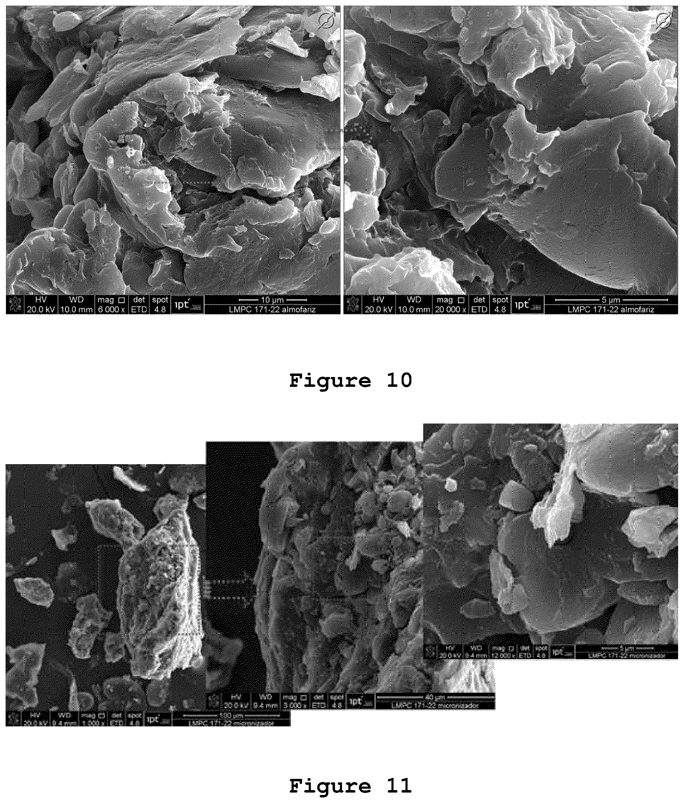

Figure 10 - Shows electromicrograph containing morphological analysis of the lipophobic breading flour, ground in mortar, illustrating the agglomeration of irregular planar particles up to 20,000x in detail. Presence of an irregular planar particle cluster, measuring between 2 and 50 µm.
Figure 11 - Shows electromicrograph containing the morphological analysis of lipophobic breading flour, ground in a micronizer, in a sequence of successive magnification up to 12,000x. It is noted that even in grinding the micronizer was not enough to divide the lenticular particles into smaller portions. Planar particles also showed resistance to micronization. Presence of irregular planar particles, measuring between 2 and 100 µm, and lenticular particles measuring between 5 and 50 µm.

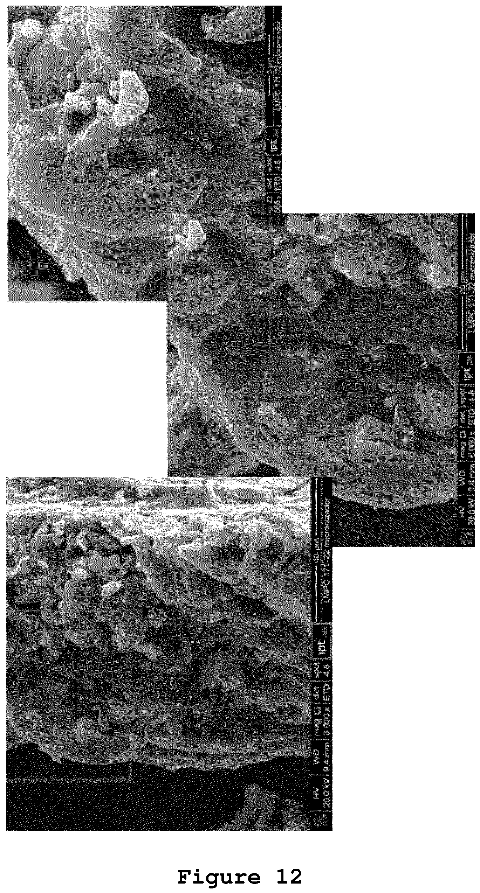

Figure 12 - Shows electromicrograph containing morphological analysis of the lipophobic breading flour, ground in a micronizer, in a sequence of successive magnification up to 12,000x. The rupture of some lenticular particles is noticed, presenting a massive interior. Presence of irregular planar particles, measuring between 5 and 50 µm, and lenticular particles measuring between 5 and 10 µm.

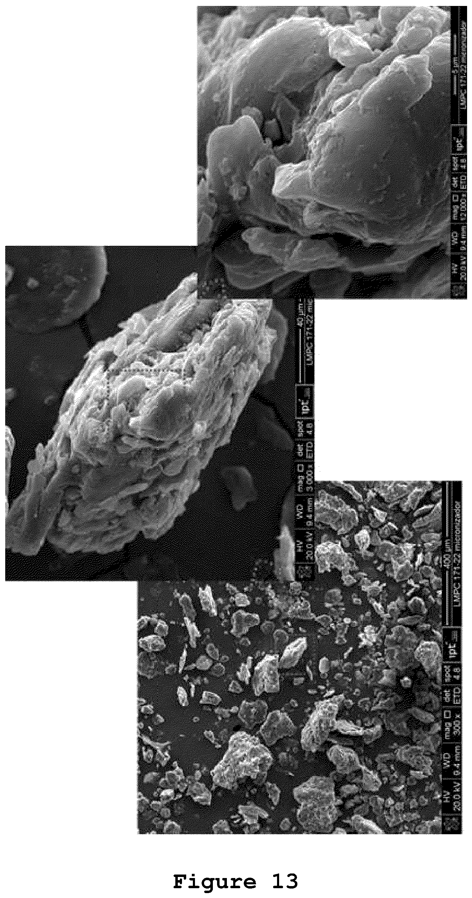

Figure 13 - Shows electromicrograph containing morphological analysis of lipophobic breading flour, ground in a micronizer, in a sequence of successive magnification up to 12,000x and illustrating agglomeration of irregular semi-sintered planar particles, in addition to the presence of irregular planar particles, measuring between 5 and 50 µm, and lenticular particles measuring between 5 and 50 µm.

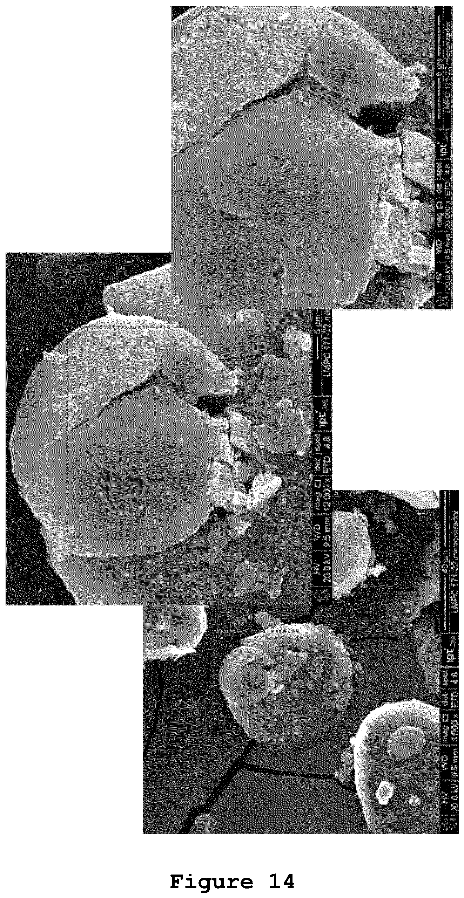

Figure 14 - Shows electromicrograph containing morphological analysis of lipophobic breading flour, ground in micronizer, in a sequence of successive magnification up to 20,000x and illustrating the presence of lenticular particles between 10 and 50 µm. It is noted that micronization has broken a lenticular particle, where it is possible to partially observe the homogeneous massive interior of the particle.

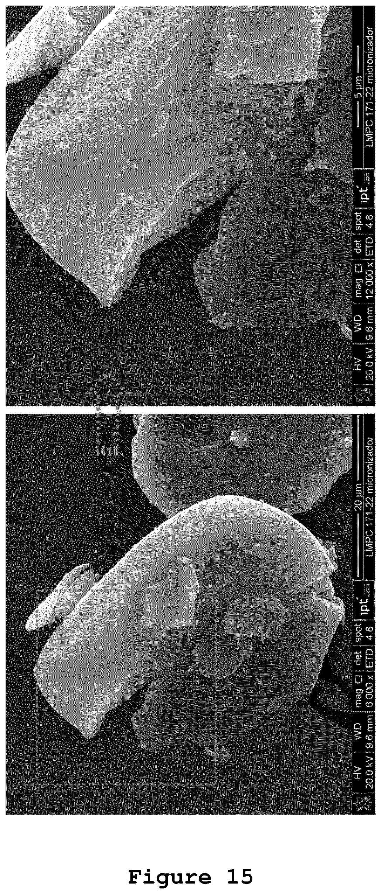

Figure 15 - Shows electromicrograph containing morphological analysis of lipophobic breading flour, ground in a micronizer, in a sequence of successive magnification up to 12,000x and illustrating the presence of lenticular particle measuring approximately 40 µm. It is noted that micronization broke a lenticular particle, where it is possible to observe the homogeneous solid interior of the particle.

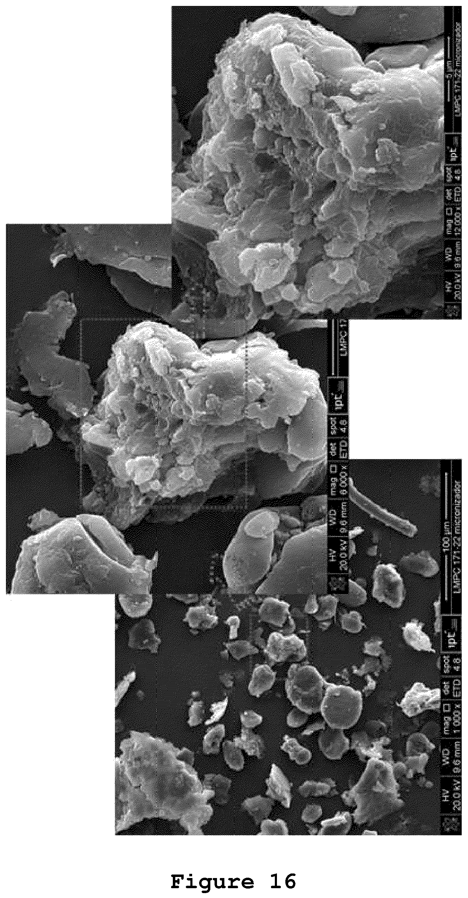

Figure 16 - Shows electromicrograph containing morphological analysis of lipophobic breading flour, ground in micronizer, illustrating the presence of an agglomeration of irregular sintered planar particles. Magnification up to 12,000x. The irregular planar particles measure between 2 and 5 µm.

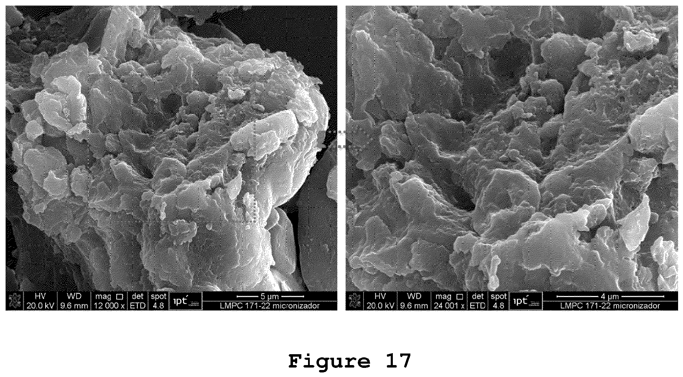

Figure 17 - Shows electromicrograph containing morphological analysis of lipophobic breading flour, ground in micronizer, illustrating the presence of agglomeration of irregular sintered planar particles. Note the amalgamated appearance of the planar particles in the image on the right. Magnification up to 24,000x.

It should be noted that this figure is merely representative, and may present variations, as long as they do not deviate from what was initially required.

### DETAILED DESCRIPTION OF THE INVENTION

In accordance with what is illustrated in the figure listed above, the "PROCESS **FOR PRODUCING LIPOPHOBIC BREADING FLOUR AND RESPECTIVE PRODUCT OBTAINED",** object of this patent, is essentially characterized by being a process consisting of the following steps:
- grinding, weighing, homogenization and storage in a silo equipped with rotating screw of initial cereal flour and/or mixtures thereof (preferentially of wheat and/or corn and/or rice and/or rye and/or barley and/or oats and/or soybeans and/or another types);
- activation of an rotating screw for insertion of the initial cereal flour and/or mixtures thereof into the centrifugal turbo cooking while simultaneously injecting of superheated steam and water saturation at 22 *ATE* and 200ºC, from a boiler, and the addition of iron, folic acid and annatto-type dye solutions, so that the bread dough formed is pushed along a horizontal path, in contact with the ultra-heated and rotating wall of the centrifugal turbo baking, subjecting it to surface and external thermalization and gelation of grains and micrograins at a temperature between 100ºC and 200ºC and centrifugation between 500 rpm and 1500 rpm, for sufficient time, temperature and centripetal force to compact the sintered and massive microgranules of particles of smooth lenticular morphology and slightly rough irregular planar, and to form agglomerates where the irregular planar particles are generally interstitial to the lenticular particles, and containing interstitial voids, until flour with an apparent density with a value between 0.7g/cm³ and 1.2g/cm³ is obtained.

As a method of realization, the product has: maximum humidity content of 10%; apparent density between 0.7 g/cm³ and 1.2 g/cm³, more specifically 0.8 g/cm³; actual density or specific mass between 1.2 g/cm³ and 1.5 g/cm³; more specifically 1.4 g/cm³; porosity between 20% and 60%, more specifically 40%; specific surface area between 1.0 m³/g and 1.1 m³/g; more specifically 1.03 m³/g. This is achieved through process and control parameters. Other relevant characteristics obtained with the new process reduced humidity in the final product (of a maximum of 10%) and the following granulometry ranges (% of fraction retained in sieve): ABNT no. 12 (1.40mm opening): between 0.1% and 5.0%; ABNT sieve no. 20 (0.85mm opening): between 4.0% and 30.0%; ABNT sieve no. 45 (0.355mm opening): between 56.0% and 90.0%; ABNT no. 45 (0.355mm opening): between 10.0% and 41.0%.

As another way of realization, it is that agglomerates formed by lenticular particles disaggregate more easily than planar particles, promoting the phenomenon of crunchiness.

As another way of realization, the agglomerates have intercommunicable interstitial voids that promote oil infiltration during frying, and rapid runoff without oil absorption by the planar and lenticular particles of solid core.

As another way of realization it is that the agglomerates formed by lenticular particles and planar particles have an index of shape, where the sphericity of the agglomerated grains is between 0.5 and 0.9, more specifically 0.8 and the circularity is between 0.5 and 0.9, more specifically 0.7.

Another way of realization is that lenticular particles have a length and/or diameter between 5 and 50 µm, more specifically 10 to 25 µm.

Another way of realization is that irregular planar particles have a length and/or diameter measuring between 2 and 100 µm, more specifically between 10 and 50 µm.

Another way of realization is that irregular planar particles have a length and/or diameter measuring between 2 and 100 µm, more specifically between 40 and 100 µm.

It can thus be seen from the foregoing that the **"PROCESS FOR PRODUCING LIPOPHOBIC BREADING FLOUR AND RESPECTIVE PRODUCT OBTAINED"** is characterized as a process and its resulting product that has all the practical and functional qualities that fully justify the patent application as a Privilege of Invention.

Obviously, it will be noticed that while the above has been described by way of illustrative example, all other modifications and variations made to this constructive arrangement, in the form that would apparently be to those with knowledge in the technique, are considered within the broad scope and under this Privilege of Invention, according to the following claim scope.

## Claims

1. **"PROCESS FOR OBTAINING LIPOPHOBIC BREADING FLOUR"****, characterized by** the following steps: grinding, weighing, homogenization and storage in a silo equipped with a rotating screw of initial cereal flour and/or mixtures thereof (preferably wheat and/or corn and/or rice and/or rye and/or barley and/or oats and/or soybeans and/or other types); rotating screw drive for insertion of the initial cereal flour and/ or mixtures thereof into the centrifugal turbo baking, simultaneously the injection of superheated steam and water saturation at 22 *ATE* and 200ºC, from a boiler, and the addition of solutions of iron, folic acid and annatto-type dye, so that the bread dough formed is pushed along a horizontal path, in contact with the ultra-heated and rotating wall of the centrifugal turbo baking, subjecting it to surface and external thermalization and gelation of the grains and micrograins at a temperature between 100ºC and 200ºC and centrifugation between 500 rpm and 1500 rpm, for sufficient time, temperature and centripetal force to compact the sintered and massive microgranules of particles of smooth lenticular morphologies and slightly rough irregular planar, and to form agglomerates where the irregular planar particles are generally interstitial to the lenticular particles, and containing interstitial voids, until flour with an apparent density with a value between 0.7g/cm³ and 1.2g/cm³ is obtained.

2. **"LIPOPHOBIC BREADING FLOUR",** according to claim 1, **characterized by** having: maximum humidity of 10%; apparent density between 0.7 g/cm³ and 1.2 g/cm³, more specifically 0.8 g/cm³; actual density or specific mass between 1.2 g/cm³ and 1.5 g/cm³; more specifically 1.4 g/cm³; porosity between 20% and 60%, more specifically 40%; specific surface area between 1.0 m³/g and 1.1 m³/g, more specifically 1.03 m³/g; granulometric ranges (% of fraction retained in sieve): ABNT sieve no. 12 (1.40mm opening): between 0.1% and 5.0%; ABNT sieve no. 20 (0.85mm opening): between 4.0% and 30.0%; ABNT sieve no. 45 (0.355mm opening): between 56.0% and 90.0%; ABNT no. 45 (0.355mm opening): between 10.0% and 41.0%; index of shape, whose sphericity of the grains is between 0.5 and 0.9, more specifically 0.8 and the circularity is between 0.5 and 0.9, more specifically 0.7.

3. **"PROCESS FOR OBTAINING LIPOPHOBIC BREADING FLOUR",** and according to claim 1, **characterized by** agglomerates formed by lenticular particles disaggregating more easily than planar particles.

4. **"LIPOPHOBIC BREADING FLOUR",** according to claim 2, **characterized by** the fact that agglomerates formed by lenticular particles disaggregate more easily than planar particles, promoting the phenomenon of crunchiness.

5. **"PROCESS FOR OBTAINING LIPOPHOBIC BREADING FLOUR",** and according to claim 1, **characterized by** the agglomerates having intercommunicable interstitial voids that promote oil infiltration during frying, and rapid runoff without oil absorption by planar and lenticular particles with a solid core.

6. **"LIPOPHOBIC BREADING FLOUR",** according to claim 2, **characterized by** the agglomerates having intercommunicable interstitial voids that promote oil infiltration during frying, and rapid runoff without oil absorption by planar and lenticular particles with a solid core.

7. **"PROCESS FOR OBTAINING LIPOPHOBIC BREADING FLOUR",** and according to claim 1, **characterized by** the fact that the agglomerates formed by lenticular particles and planar particles have an index of shape, where the sphericity of the agglomerated grains is between 0.5 and 0.9, more specifically 0.8 and the circularity is between 0.5 and 0.9, more specifically 0.7.

8. **"LIPOPHOBIC BREADING FLOUR",** according to claim 2, **characterized by** agglomerates formed by lenticular particles and planar particles have an index of shape, where the sphericity of the agglomerated grains is between 0.5 and 0.9, more specifically 0.8 and the circularity is between 0.5 and 0.9, more specifically 0.7.

9. **"PROCESS FOR OBTAINING LIPOPHOBIC BREADING FLOUR",** and according to claim 1, **characterized by** lenticular particles having a length and/or diameter between 5 and 50 µm, more specifically 10 to 25 µm.

10. **"LIPOPHOBIC BREADING FLOUR",** according to claim 2, **characterized by** lenticular particles having a length and/or diameter between 5 and 50 µm, more specifically 10 to 25 µm.

11. **"PROCESS FOR OBTAINING LIPOPHOBIC BREADING FLOUR",** and according to claim 1, **characterized by** irregular planar particles having a length and/or diameter measuring between 2 and 100 µm, more specifically between 10 and 50 µm.

12. **"LIPOPHOBIC BREADING FLOUR",** according to claim 2, **characterized by** irregular planar particles having a length and/or diameter measuring between 2 and 100 µm, more specifically between 10 and 50 µm.

13. **"PROCESS FOR OBTAINING LIPOPHOBIC BREADING FLOUR",** and according to claim 1, **characterized by** irregular planar particles having a length and/or diameter measuring between 2 and 100 µm, more specifically between 40 and 100 µm.

14. **"LIPOPHOBIC BREADING FLOUR",** according to claim 2, **characterized by** irregular planar particles having a length and/or diameter measuring between 2 and 100 µm, more specifically between 40 and 100 µm.
